# EUROPEAN PATENT APPLICATION

(11) **EP 4 389 705 A1**
(43) Date of publication of application: **26.06.2024**
(21) Application number: 22858440.5
(22) Date of filing: 15.08.2022
(51) Int. Cl.: C01F 11/18

(54) **PRODUCTION METHOD OF CALCIUM CARBONATE AND CALCIUM CARBONATE PRODUCTION DEVICE**

(30) Priority: 20.08.2021 JP 2021134690
(71) Applicant: Noritake Co., Limited, Nagoya-shi, Aichi 451-8501 (JP)
(72) Inventor: YOSHINO, Yasushi, Nagoya-shi, Aichi 451-8501 (JP); OHASHI, Takayuki, Nagoya-shi, Aichi 451-8501 (JP)
(74) Representative: Gille Hrabal Partnerschaftsgesellschaft mbB Patentanwälte
(86) International application number: PCT/JP2022/030841
(87) International publication number: WO 2023/022119

(57) **Abstract**

The present invention provides a production method of calcium carbonate whereby carbon dioxide is fixed as calcium carbonate by a safe and simple method. The production method of calcium carbonate disclosed herein includes the following steps. Step (S 1) of preparing a slurry including calcium hydroxide, and step (S2) of precipitating calcium carbonate by generating fine bubbles including carbon dioxide from a fine bubble generator that is provided with a porous section having micropores, and supplying the carbon dioxide into the slurry including the calcium hydroxide in a container configured to prevent carbon dioxide from being released into the atmosphere. Here, the fine bubble generator supplies carbon dioxide so that a flow rate of carbon dioxide is 40 to 2500 ml/min per 1 mol of the calcium hydroxide.

## Description

### Technical Field

The present invention relates to a production method of calcium carbonate and a calcium carbonate production device for fixing carbon dioxide as calcium carbonate. The present application claims priority based on Japanese Patent Application No. 2021-134690 filed on August 20, 2021, and the entire contents of that application are incorporated herein by reference.

### Background Art

Since carbon dioxide (CO₂) is a greenhouse gas that greatly affects environmental problems such as global warming, there is a need to significantly reduce emissions thereof. For this reason, the development of techniques for selectively recovering and fixing carbon dioxide emitted from thermal power plants, factories, and the like is underway.

As a technique for collecting and fixing carbon dioxide, for example, a method of fixing carbon dioxide as a carbonate (for example, calcium carbonate) through a chemical reaction is known. Patent Literature 1 and 2 describe production methods of calcium carbonate. Specifically, a method for producing calcium carbonate by introducing a carbon dioxide-containing gas into a slurry of calcium hydroxide is described. It is indicated that flue gas such as flue gas from a limestone calcining kiln or flue gas from lime calcination in a pulp manufacturing plant may be used as the carbon dioxide-containing gas. Various techniques have been proposed for producing calcium carbonate. For example, Patent Literature 3 discloses a method of precipitating calcium carbonate and/or magnesium carbonate in the presence of ultra-fine bubbles including carbon dioxide gas.

### Citation List

### Patent Literature

Patent Literature 1: Japanese Patent No. 3995761
Patent Literature 2: Japanese Patent No. 4961074
Patent Literature 3: Japanese Patent No. 6742867

### Summary of Invention

### Technical Problem

From the viewpoint of fixing more carbon dioxide as a carbonate and reducing an amount of carbon dioxide released into the atmosphere, it is preferable to generate carbonate in a system where the introduced carbon dioxide (carbon dioxide gas) is not released into the atmosphere. For example, a closed or circulating system may be used to prevent carbon dioxide from being released into the atmosphere. According to the results of intensive studies by the present inventors, it has been found that when carbon dioxide gas is blown by the techniques disclosed in Patent Literature 1 to 3 into a container configured to prevent carbon dioxide from being released into the atmosphere, the pressure inside the container increased due to the large amount of carbon dioxide gas blown into the container. Where the pressure inside the container becomes too high, there are problems from a safety standpoint, such as damage to the container.

Furthermore, in recent years, not only large-scale factories but also small and medium-sized factories are required to significantly reduce carbon dioxide emissions. In order to utilize the exhaust gas from a factory as described in Patent Literature 1 and 2, it is necessary to install a carbonate production facility in the immediate vicinity of the factory that generates exhaust gas. Another problem is that since it is necessary to install large-scale equipment, such as laying piping, for introducing the exhaust gas, the cost increases.

The present invention has been made in view of the above circumstances, and it is an object of the present invention to provide a production method of calcium carbonate for fixing carbon dioxide as calcium carbonate by a safe and simple method. Another object of the present invention is to provide a calcium carbonate production device for implementing the production method of calcium carbonate.

### Solution to Problem

A production method of calcium carbonate for fixing carbon dioxide as calcium carbonate is provided to achieve the above object. This production method includes: a step of preparing a slurry including calcium hydroxide; and a step of precipitating the calcium carbonate by generating fine bubbles including carbon dioxide from a fine bubble generator that is provided with a porous section having micropores and supplying the carbon dioxide into the slurry including calcium hydroxide in a container configured to prevent carbon dioxide from being released into the atmosphere. Here, the fine bubble generator supplies the carbon dioxide so that a flow rate of the carbon dioxide is 40 to 2500 ml/min per 1 mol of the calcium hydroxide.

According to this configuration, by controlling the flow rate of carbon dioxide in the fine bubble generator to generate fine bubbles including carbon dioxide, even in a container configured to prevent carbon dioxide from being released into the atmosphere, carbon dioxide can be supplied safely without increasing the pressure inside the container too much. As a result, carbon dioxide can be fixed as calcium carbonate by a safe and simple method. According to this production method of calcium carbonate, the amount of carbon dioxide released into the atmosphere can be significantly reduced.

In a preferred embodiment of the production method disclosed herein, a concentration of the calcium hydroxide in the slurry including the calcium hydroxide is 0.1 mol/L or more and 2 mol/L or less.

According to this feature, the carbon dioxide supplied as fine bubbles and the calcium hydroxide in the slurry can react suitably, and the carbon dioxide can be safely fixed as calcium carbonate without increasing the pressure inside the container too much.

In a preferred embodiment of the production method disclosed herein, the micropores in the fine bubble generator have an average pore diameter of 0.5 µm or more and 10 µm or less.

According to this feature, suitable fine bubbles can be generated, and carbon dioxide can be safely fixed as calcium carbonate without increasing the pressure inside the container too much.

In a preferred embodiment of the production method disclosed herein, the precipitation step is performed, with the container being sealed to prevent the carbon dioxide from being released into the atmosphere.

According to such a configuration, carbon dioxide can be more suitably fixed as calcium carbonate, and the amount of carbon dioxide released into the atmosphere can be significantly reduced.

In a preferred embodiment of the production method disclosed herein, the precipitation step is characterized by being carried out while the pressure inside the sealed container is maintained at less than 0.2 MPa.

According to this feature, a relatively simple container can be used as the container that is sealed to prevent carbon dioxide from being released into the atmosphere. As a result, carbon dioxide can be fixed as calcium carbonate by a simple and safe method.

In a preferred embodiment of the production method disclosed herein, the average diameter of the fine bubbles generated in the precipitation step is 100 µm or less, and the fine bubbles include at least ultrafine bubbles having a diameter of less than 1 µm.

According to this feature, by supplying carbon dioxide in the form of fine bubbles, the effect of stirring the slurry including calcium hydroxide can also be obtained. In addition, by including ultrafine bubbles, the gas-liquid contact area is increased, and the speed at which carbon dioxide and calcium hydroxide react can be raised. As a result, carbon dioxide can be more suitably fixed as calcium carbonate.

As another aspect, the technique disclosed herein provides a calcium carbonate production device for fixing carbon dioxide as calcium carbonate. This calcium carbonate production device is for fixing carbon dioxide as calcium carbonate and includes: a container configured to prevent carbon dioxide from being released into the atmosphere; a slurry supply section that supplies a slurry including calcium hydroxide into the container; and a carbon dioxide supply section that supplies carbon dioxide into the slurry including the calcium hydroxide that has been supplied into the container. Here, the carbon dioxide supply section is characterized in that fine bubbles including the carbon dioxide are supplied from a fine bubble generator that is provided with a porous section having micropores so that the flow rate of the carbon dioxide is 40 to 2500 ml/min per 1 mol of the calcium hydroxide.

According to this configuration, carbon dioxide can be safely supplied without increasing the pressure inside the container too much in the container configured to prevent carbon dioxide from being released into the atmosphere. As a result, it is possible to realize a calcium carbonate production device for safely and easily fixing carbon dioxide as calcium carbonate.

In a preferred embodiment of the production device disclosed herein, the container has a configuration sealed to prevent the carbon dioxide from being released into the atmosphere.

According to such a configuration, carbon dioxide can be more suitably fixed as calcium carbonate, and the amount of carbon dioxide released into the atmosphere can be reduced.

In a preferred embodiment of the production device disclosed herein, the fine bubbles provided by the fine bubble generator have an average diameter of 100 µm or less and include at least ultrafine bubbles having a diameter of less than 1 µm.

By supplying carbon dioxide in the form of fine bubbles by using a fine bubble generator, carbon dioxide can be supplied while stirring the slurry including calcium hydroxide. In addition, by generating fine bubbles including ultrafine bubbles, the gas-liquid contact area is increased, and the speed at which carbon dioxide and calcium hydroxide react is raised. With such a configuration, carbon dioxide can be more suitably fixed as calcium carbonate.

### Brief Description of Drawings

[Fig. 1]

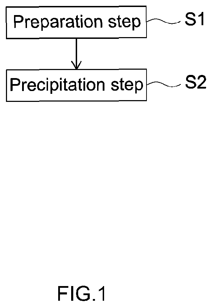

   Fig. 1 is a flow diagram illustrating a production method of calcium carbonate according to one embodiment.
[Fig. 2]

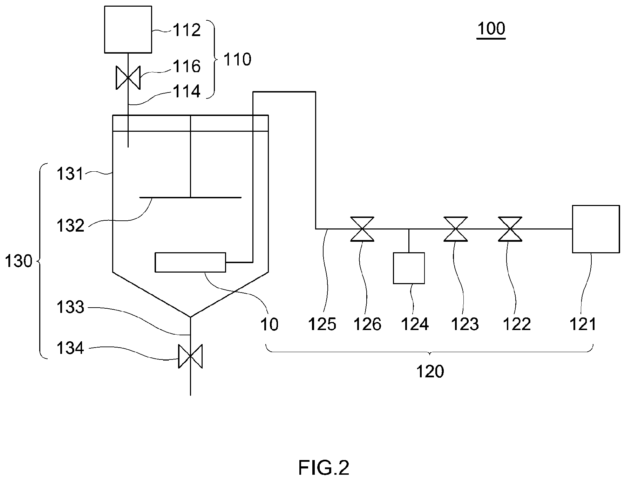

   Fig. 2 is a diagram schematically showing a calcium carbonate production device according to one embodiment.
[Fig. 3]

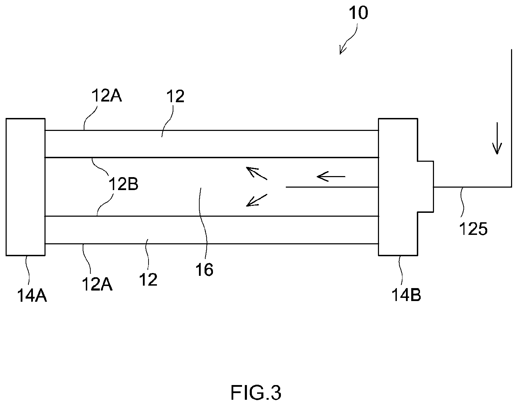

   Fig. 3 is a diagram schematically showing the configuration of a fine bubble generator provided with a porous section having micropores according to one embodiment.

### Description of Embodiments

Hereinafter, preferred embodiments of the present invention will be described with reference to the drawings as appropriate. Matters other than those specifically mentioned in this specification that are necessary for implementing the present invention can be understood as matters designed by a person skilled in the art based on the related art in the pertinent field. The present invention can be implemented based on the contents disclosed in the present specification and the common technical knowledge in the field. In this specification, the notation "X to Y" indicating a numerical range means "X or more and Y or less" unless otherwise specified.

Fig. 1 is a flow diagram schematically showing the production method of calcium carbonate disclosed herein. As shown in Fig. 1, the production method disclosed herein includes a preparation step S 1 of preparing a slurry including calcium hydroxide, and a precipitation step S2 of precipitating calcium carbonate by supplying carbon dioxide into the prepared slurry including calcium hydroxide in a container configured to prevent carbon dioxide from being released into the atmosphere. The production method disclosed herein is characterized by that in the precipitation step S2, the fine bubbles including carbon dioxide are supplied into the slurry from a fine bubble generator that is provided with a porous section having micropores so that the flow rate of carbon dioxide is 40 to 250 ml/min per 1 mol of calcium hydroxide. According to this production method, carbon dioxide can be safely and easily fixed as calcium carbonate even in a container configured to prevent carbon dioxide from being released into the atmosphere. The production method disclosed herein may further include other steps at any stage.

Here, "fixing carbon dioxide" means converting carbon dioxide into a carbon compound by causing a chemical reaction with a solution or the like. For example, in the present description, carbon dioxide is converted into calcium carbonate by chemically reacting with a slurry including calcium hydroxide. In this way, by converting carbon dioxide into a useful carbonic compound, the amount of carbon dioxide emitted into the atmosphere is significantly reduced and carbon dioxide is recycled. Therefore, contribution can be made to solving environmental problems such as global warming.

The source of supply (generation) of carbon dioxide to be fixed is not particularly limited. For example, carbon dioxide generated from factories, thermal power plants, automobiles, and the like may be recovered and fixed as calcium carbonate.

The preparation step S1 is a step of preparing a slurry including calcium hydroxide (Ca(OH)₂), which is a raw material for calcium carbonate (CaCO₃). Such slurry is in the form of a dispersion or slurry-like composition in which calcium hydroxide is dispersed in a liquid medium such as an aqueous solvent. The slurry including calcium hydroxide may be prepared by a method similar to that used in a general production method of calcium carbonate. For example, the adjustment may be made by adding water to quicklime (CaO), or by dispersing powdered calcium hydroxide in an aqueous solvent or the like. Here, the aqueous solvent may be, for example, water or a mixed solution of water and an alcohol. As the aqueous solvent, ion exchange water (deionized water), pure water, ultrapure water, distilled water, and the like can be preferably used.

The concentration of calcium hydroxide in the slurry prepared in the preparation step S1 may be 0.1 mol/L or more, 0.25 mol/L or more, or 0.5 mol/L or more. Further, the upper limit of the concentration of calcium hydroxide is preferably less than 3 mol/L, more preferably 2.5 mol/L or less, and particularly preferably 2 mol/L or less. Where the concentration of calcium hydroxide is within this range, the carbon dioxide supplied as fine bubbles and the calcium hydroxide in the slurry react suitably, and calcium carbonate can be easily produced.

Further, the pH of the slurry prepared in the preparation step S 1 is not particularly limited, but it is preferably adjusted to, for example, about 12 or more and 13 or less.

The precipitation step S2 is a step of supplying fine bubbles including carbon dioxide to the prepared slurry in a container configured to prevent carbon dioxide (CO₂) from being released into the atmosphere, and precipitating calcium carbonate. In the precipitation step S2, carbon dioxide is preferably supplied until the pH of the slurry prepared in the preparation step S 1 becomes 5 or more and 8 or less, more preferably 6 or more and 7.5 or less.

Here, the container used in the precipitation step S2 only needs to be configured to prevent carbon dioxide from being released into the atmosphere. For example, the container may be hermetically sealed or may be equipped with a mechanism for circulating the supplied carbon dioxide. Preferably, the container is hermetically sealed. Where the container is hermetically sealed, safety issues such as damage to the container may occur if the pressure inside the container increases too much. Therefore, in the precipitation step S2, calcium carbonate is preferably precipitated while the pressure inside the container is maintained at, for example, less than 0.2 MPa (preferably 0.15 MPa or less, more preferably 0.1 MPa or less). That is, in the production method disclosed herein, carbon dioxide is supplied using a method that does not increase the pressure inside the container too much. The pressure inside the container can be measured using a general pressure gauge.

As a method for supplying carbon dioxide, a method is used in which carbon dioxide is supplied by generating fine bubbles including carbon dioxide from a fine bubble generator provided with a porous section having micropores. Here, in the present description, "fine bubbles including carbon dioxide" mean fine bubbles formed, for example, by introducing a gas (carbon dioxide gas) including 90% or more (more preferably 95% or more) of carbon dioxide under pressure into the fine bubble generator. In the present description, the "fine bubbles" are inclusive of at least "microbubbles" and "ultrafine bubbles". The definition of microbubbles and ultrafine bubbles is based on the standards of the International Organization for Standardization (ISO). Microbubbles are bubbles with an average diameter of 1 µm or more and less than 100 µm, and ultrafine bubbles are bubbles with an average diameter of less than 1 µm. In the production method disclosed herein, the fine bubbles preferably have an average diameter of 100 µm or less and include at least ultrafine bubbles with a diameter of less than 1 µm.

In the present description, "average diameter" refers to the diameter (D50, also called median diameter) corresponding to a cumulative frequency of 50% by number from the fine particle side with small particle size in a number-based particle size distribution based on a general image analysis method. Such an image analysis method can be performed using, for example, a dynamic image analysis type particle shape/diameter distribution measuring device.

The fine bubble generator supplies fine bubbles including carbon dioxide so that the flow rate of carbon dioxide is preferably 40 to 2500 ml/min, more preferably 100 to 1200 ml/min, and still more preferably 150 to 900 ml/min per 1 mol of calcium hydroxide. As a result, the pressure inside the container fluctuates at about 0.2 MPa or less, so that carbon dioxide can be safely fixed as calcium carbonate even if the container is configured to prevent carbon dioxide from being released into the atmosphere.

The fine bubble generator is supplied with carbon dioxide (carbon dioxide gas) at a supply pressure sufficient to generate fine bubbles in a slurry including calcium hydroxide. Meanwhile, there is an appropriate range for the pressure difference with the pressure inside the container for each average pore diameter of the porous section of the fine bubble generator, and if the supply pressure of carbon dioxide is too high, millibubbles with an average diameter of more than 100 µm are mainly generated, without the generation of ultrafine bubbles, leading to a decrease in the reaction rate and a sudden increase in the pressure inside the container. From this point of view, the difference between the supply pressure of carbon dioxide and the pressure inside the container is, for example, preferably 0.01 MPa or more and 0.8 MPa or less, more preferably 0.04 MPa or more and 0.6 MPa or less, and particularly preferably 0.06 MPa or more and 0.4 MPa or less where the pressure in a bubble point test of the fine bubble generator in distilled water is taken as 0.

The amount of carbon dioxide supplied per minute (carbon dioxide gas flow rate (ml/min)) into the slurry from the fine bubble generator may be constant or may differ during the reaction with calcium hydroxide. Preferably, it is adjusted to match the reaction rate between carbon dioxide and calcium hydroxide. Such reaction rates can be monitored, for example, by measuring the pH of the slurry including calcium hydroxide. At a stage where the pH is high (i.e., at the early stage of the reaction), the reaction rate between carbon dioxide and calcium hydroxide is high, and the pressure inside the container is unlikely to rise, so it is possible to increase the carbon dioxide gas flow rate (ml/min). Meanwhile, at a stage where the pH is low (that is, at a late stage of the reaction), the reaction rate between carbon dioxide and calcium hydroxide slows down, and the pressure inside the container tends to rise, so it is preferable to reduce the carbon dioxide gas flow rate (ml/min). Therefore, the carbon dioxide gas flow rate (ml/min) may be adjusted to decrease in accordance with the reaction rate from the early stage of the reaction to the late stage of the reaction. This carbon dioxide gas flow rate (ml/min) can be adjusted by changing the carbon dioxide supply conditions such as the supply pressure mentioned above.

In the precipitation step S2, it is preferable to thoroughly stir the slurry including calcium hydroxide in order to increase the reaction rate between carbon dioxide and calcium hydroxide. For example, stirring may be performed using a stirrer conventionally used in production methods of calcium carbonate, such as a stirrer equipped with rotating blades (also referred to as blades). The stirring speed is not particularly limited, but may be, for example, about 0.5 to 1.5 m/s.

In the production method disclosed herein, by supplying fine bubbles including carbon dioxide into the slurry by using a fine bubble generator, it is also possible to stir the slurry while supplying carbon dioxide into the slurry. Furthermore, when ultrafine bubbles of less than, in particular, 1 µm are included as fine bubbles including carbon dioxide, the gas-liquid contact area increases and the reaction rate between carbon dioxide and calcium hydroxide can also be increased. Therefore, the stirring with the stirrer may be performed at a slower speed than the conventional stirring speed. As a result, the energy required to operate the stirrer can be reduced, and the amount of carbon dioxide emissions can be suppressed compared to the conventional production methods.

Since the precipitation step S2 is carried out in a container configured to prevent carbon dioxide from being released into the atmosphere, the amount of fixed carbon dioxide can be calculated from the carbonation rate and the amount of carbon dioxide supplied in the precipitation step S2. Therefore, according to the production method disclosed herein, it is also possible to clearly indicate the degree to which carbon dioxide could be fixed as calcium carbonate. In addition, in the present description, "carbonation rate" refers to the mass amount of precipitated calcium carbonate relative to the mass amount of calcium hydroxide used when preparing the slurry.

The production method disclosed herein may further include a step of blowing carbon dioxide gas in a step downstream of the precipitation step S2. This carbon dioxide gas blowing step can be performed by a conventionally known method. At this time, it is preferable to use exhaust gas discharged from a factory or the like as the carbon dioxide gas to be blown in. This makes it possible to further reduce the amount of carbon dioxide emitted into the atmosphere. When exhaust gas is used as carbon dioxide gas, a gas may be used from which dust has been removed using a filter or the like.

Furthermore, in the production method disclosed herein, it is preferable to include a step of recovering calcium carbonate in a step downstream of the precipitation step S2. Such a step of recovering calcium carbonate can be carried out by a conventionally known method such as filtration. The recovered calcium carbonate can be used in industry for pigments, paints, rubber, paper manufacturing, and the like.

According to the above-described configuration, carbon dioxide can be fixed as calcium carbonate by a safe and simple method even in a container configured to prevent carbon dioxide from being released into the atmosphere. Therefore, the production method of calcium carbonate disclosed herein can significantly reduce the amount of carbon dioxide emitted into the atmosphere and can usefully recycle carbon dioxide. Therefore, this method can contribute to solving environmental problems such as global warming.

Next, a configuration example of a production device for realizing the above-described production method of calcium carbonate will be described. Fig. 2 is a diagram schematically showing the calcium carbonate production device disclosed herein. As shown in Fig. 2, a calcium carbonate production device 100 includes a slurry supply section 110, a carbon dioxide supply section 120, and a reaction section 130. The slurry supply section 110 and the reaction section 130 are connected by a line 114. The carbon dioxide supply section 120 and the reaction section 130 are connected by a line 125. The reaction section 130 is connected to the slurry supply section 110 and the carbon dioxide supply section 120 by the line 114 and the line 125 and is equipped with a line 133 for recovering the produced calcium carbonate.

The slurry supply section 110 supplies a slurry including calcium hydroxide to the reaction section 130 via the line 114. Meanwhile, the carbon dioxide supply section 120 supplies carbon dioxide to the reaction section 130 via the line 125. The reaction section 130 is configured to prevent the carbon dioxide supplied from the carbon dioxide supply section 120 from being released into the atmosphere, calcium carbonate is produced by reacting calcium hydroxide and carbon dioxide in the reaction section 130, and carbon dioxide can be fixed as calcium carbonate. According to this configuration, the amount of carbon dioxide emitted into the atmosphere can be significantly reduced. Each configuration of the calcium carbonate production device 100 will be described below.

The slurry supply section 110 is for supplying a slurry including calcium hydroxide to the reaction section 130. The slurry supply section 110 includes a tank 112 in which slurry including calcium hydroxide is stored, the line 114, and a valve 116 for opening and closing the line 114. A slurry in which calcium hydroxide is dispersed in an aqueous solvent (for example, water) is stored in the tank 112, and by opening and closing the valve 116, a desired amount of slurry is supplied to the reaction section 130 via the line 114.

The carbon dioxide supply section 120 is for supplying carbon dioxide to the reaction section 130. The carbon dioxide supply section 120 includes a fine bubble generator 10 that supplies carbon dioxide into the slurry by generating fine bubbles including carbon dioxide, and a storage section 121 that temporarily stores carbon dioxide to be fixed, a pressure adjustment valve 122 that adjusts the supply pressure of gas containing carbon dioxide, a flow rate adjustment valve 123 that adjusts the flow rate of carbon dioxide, a flowmeter 124 that measures the flow rate of carbon dioxide, the line 125, and a valve 126 for opening and closing the line 125.

The storage section 121 temporarily stores carbon dioxide to be fixed. A means for introducing carbon dioxide into the storage section 121 is not particularly limited. For example, carbon dioxide may be introduced through piping from a factory or the like that is the supply (generation) source of carbon dioxide or may also be introduced through a carbon dioxide absorption material that was installed at the supply (generation) source of carbon dioxide and adsorbed carbon dioxide. Examples of such carbon dioxide absorption materials include, for example, porous materials, chemical absorption materials into which amino groups and the like having carbon dioxide absorption ability are introduced, metal-organic frameworks (MOF), carbonaceous materials, and carbon dioxide adsorption/absorption materials made of alkali metal carbonates and the like.

The storage section 121 is preferably configured so that carbon dioxide is introduced from the above-mentioned carbon dioxide absorption material. Since such carbon dioxide absorption materials can be easily reduced in size, the production method can be implemented at a lower cost than when tubes are installed to directly introduce carbon dioxide from a factory or the like. The carbon dioxide recovered in the carbon dioxide absorption material can be, for example, released by heating using steam or the like and introduced into the storage section 121. In a preferred embodiment, carbon dioxide may be introduced from a chemical absorption material into which an amino group or the like having carbon dioxide absorption ability was introduced.

Fig. 3 is a diagram schematically showing the fine bubble generator 10 used in the calcium carbonate production device 100 disclosed herein. The fine bubble generator 10 is provided with a porous section 12 having a porous structure having micropores, support sections 14A and 14B that support the porous section 12, and a gas introduction section 16 into which gas under a predetermined pressure is introduced. The support portion 14A is configured to accommodate the end portion on one end side (the left end side in the figure) of the porous section 12 and closes the end portion (the left end portion in the figure) of the porous section 12. The support section 14B is configured to accommodate the end portion on the other end side (the right end side in the figure) of the porous section 12, and is configured to allow gas (for example, carbon dioxide) to be introduced from the line 125. Gas is introduced into the gas introduction section 16 through the line 125 as shown by the arrow in the figure.

In the fine bubble generator 10, gas is introduced into the gas introduction section 16 under the applied supply pressure that is higher than the external pressure with which the outer surface side 12A of the porous section 12 is in contact, whereby the gas is pressurized from the inner surface side 12B of the porous section 12 into the pores of the porous section 12 and released from the outer surface side 12A. As a result, fine bubbles as described above are released to the outside.

The shape of the porous section 12 is not particularly limited, but may be, for example, cylindrical, plate-like, hemispherical, or the like. Further, the average pore diameter of the porous section 12 is not particularly limited as long as the above-mentioned fine bubbles can be generated, but may be, for example, 0.5 µm or more and 10 µm or less, or 1 µm or more and 10 µm or less.

The porous section 12 has communicating pores and is composed of a porous body with a porosity of about 20% to 60%. Examples of the material for the porous section 12 include oxide-based ceramics such as alumina (Al₂O₃), zirconia (ZrO₂), magnesia (MgO), silica (SiO₂), titania (TiO₂), zircon (ZrSiO₄), and mullite (Al₆O₁₃Si₂), non-oxide ceramics such as silicon nitride (Si₃N₄), boron nitride (BN), aluminum nitride (AlN), silicon carbide (SiC), boron carbonitride, and the like, and composite materials containing at least one type of such ceramics. Among them, alumina, boehmite, silica, and titania can be preferably used because they are inexpensive and easily available and have stable quality. The chemical formulas shown in parentheses after the above substance names indicate typical compositions of the substances and are not intended to limit the composition of the actual ceramic to that of the chemical formula.

As described above, the fine bubble generator 10 is configured to supply fine bubbles including carbon dioxide so that the flow rate of carbon dioxide is preferably 40 to 2500 ml/min, more preferably 100 to 1200 ml/min, and still more preferably 150 to 900 ml/min per 1 mol of calcium hydroxide. As a result, the pressure inside the container is prevented from rising too much, so that carbon dioxide can be safely fixed as calcium carbonate even if the container is configured to prevent carbon dioxide from being released into the atmosphere.

The flow rate of carbon dioxide supplied into the fine bubble generator 10 is adjusted to a desired flow rate by the pressure adjustment valve 122 or the flow rate adjustment valve 123. Further, the amount of carbon dioxide supplied from the fine bubble generator 10 can be measured by the flowmeter 124 disposed downstream of the flow rate adjustment valve 123. The amount of fixed carbon dioxide can be calculated from the amount of carbon dioxide measured by the flowmeter 124 and the carbonation rate.

Further, the difference between the supply pressure of carbon dioxide to the fine bubble generator 10 and the pressure inside the container is, for example, preferably 0.01 MPa or more and 0.8 MPa or less, more preferably 0.04 MPa or more and 0.6 MPa or less, and particularly preferably 0.06 MPa or more and 0.4 MPa or less where the pressure in a bubble point test of the fine bubble generator 10 in distilled water is taken as 0. The supply pressure to the fine bubble generator 10 is adjusted by the pressure adjustment valve 122. The pressure adjustment valve 122 may be a pressure adjustment pump.

The reaction section 130 is for reacting the slurry including calcium hydroxide supplied from the slurry supply section 110 with carbon dioxide supplied from the carbon dioxide supply section 120 to precipitate calcium carbonate. The reaction section 130 includes a reaction tank 131 to which the slurry including calcium hydroxide and a carbon dioxide-containing gas are supplied, a stirrer 132 that stirs the inside of the reaction tank 131, a line 133, and a valve 134 that opens and closes the line 133.

The reaction tank 131 is configured to prevent carbon dioxide from being released to the outside. The reaction tank 131 is an example of the container. For example, the reaction tank 131 may be hermetically sealed, or may be configured so that the supplied carbon dioxide is circulated. Preferably, the reaction tank 131 is sealed. The production device disclosed herein is configured such that the internal pressure of the container of the reaction tank 131 is maintained at less than 0.2 MPa (typically 0.15 MPa or less, for example, 0.1 MPa or less). That is, the method of supplying carbon dioxide as described above can be preferably employed.

The stirrer 132 is not particularly limited, but preferably has a predetermined pressure resistance. The stirrer 132 includes, for example, a rotating blade and a motor connected to the rotating blade by a rotating shaft. In order to prevent carbon dioxide from being released into the atmosphere from the rotating shaft and the bearing part of the rotating shaft, the stirrer 132 may be hermetically sealed around the rotating shaft with an oil seal, dry gas seal, or the like. The oil seals and dry gas seals generally have a pressure resistance of about 0.3 to 0.5 MPa. According to the production device disclosed herein, carbon dioxide is supplied so as not to exceed the pressure resistance of the oil seal or dry gas seal.

According to the calcium carbonate production device 100 configured as described above, the production method of calcium carbonate for fixing carbon dioxide as calcium carbonate can be suitably realized.

Hereinafter, some examples related to the present invention will be described, but the present invention is not intended to be limited to the following examples.

### [First Test]

First, suitable production conditions for calcium carbonate when carbon dioxide is supplied using a fine bubble generator provided with a porous section having micropores in a container with an open top was investigated.

### <Example 1>

Calcium carbonate was produced in a cylindrical reaction tank (inner diameter 9.7 cm, height 25 cm, internal capacity 1.85 L) with an open top. As the fine bubble generator, an immersion-type fine bubble generator made of ceramic (manufactured by Noritake Company Limited, average pore diameter 1.3 µm) was prepared.

A total of 1 L of 0.25 mol/L calcium hydroxide (Ca(OH)₂) slurry was prepared and poured into the cylindrical reaction tank. While stirring the calcium hydroxide slurry with a stirrer (stirring blade ϕ5 cm, stirring speed 0.8 m/s), 100% carbon dioxide gas was supplied to the fine bubble generator and fine bubbles including carbon dioxide were generated. At this time, carbon dioxide was supplied at a flow rate of 700 ml/min per 1 mol of calcium hydroxide for 45 min until the pH was stabilized at about 6.5 to 6.8. Table 1 shows the carbon dioxide supply conditions. The temperature at the start of the reaction was about 20°C, and the pH before the start of the reaction was about 12.5.

### <Example 2>

The carbon dioxide supply conditions of the fine bubble generator and the stirring speed of the stirrer were changed as shown in Table 1. Other than this, calcium carbonate was produced in the same manner as in Example 1.

### <Example 3 and Example 4>

In Examples 3 and 4, carbon dioxide was supplied using a stainless steel tube with an outer diameter of 6.35 mm and an inner diameter of 4.93 mm instead of the fine bubble generator. Additionally, the carbon dioxide supply conditions and the stirring speed were changed as shown in Table 1. Other than this, calcium carbonate was produced in the same manner as in Example 1.

### <Example 5>

The concentration of calcium hydroxide slurry was changed to 1 mol/L. Furthermore, the carbon dioxide supply conditions of the fine bubble generator were changed as shown in Table 1. Other than this, calcium carbonate was produced in the same manner as in Example 1.

### [Table 1]

**Table 1**

| | Slurry concentration (mol/L) | Stirring speed (m/s) | Carbon dioxide supply conditions | | |
|---|---|---|---|---|---|
| | | | Supply method | Average carbon dioxide gas flow rate (ml/min) | Reaction time (min) |
| Example 1 | 0.25 | 0.8 | 1.3 µm fine bubble generator | 175 (700 ml/min per 1 mol of Ca(OH)₂) | 45 |
| Example 2 | 0.25 | 1.6 | 1.3 µm fine bubble generator | 175 (700 ml/min per 1 mol of Ca(OH)₂) | 55 |
| Example 3 | 0.25 | 0.8 | Stainless steel tube | 175 (700 ml/min per 1 mol of Ca(OH)₂) | 120 |
| Example 4 | 0.25 | 1.6 | Stainless steel tube | 175 (700 ml/min per 1 mol of Ca(OH)₂) | 60 |
| Example 5 | 1 | 0.8 | 1.3 µm fine bubble generator | 500 (500 ml/min per 1 mol of Ca(OH)₂) | 100 |

As shown in Table 1, it is understood that in Examples 1 and 2 in which carbon dioxide was supplied using the fine bubble generator, the reaction time was shorter than in Examples 3 and 4 in which carbon dioxide was supplied using a stainless steel tube. Furthermore, when comparing Example 3 and Example 4, the reaction time was significantly shortened by increasing the stirring speed. Meanwhile, when comparing Example 1 and Example 2, it is understood that the reaction time is shorter in Example 1, which has a slower stirring speed. This is presumed to be because, at the stirring speed of Example 2, the stirring force was strong, a vortex was created at the center of the reaction tank, and the fine bubbles were not dispersed properly, resulting in a decrease in the reaction rate. It is understood that in Example 5, the reaction time was shorter than in Example 3, even though the slurry concentration was approximately four times that of Example 3.

### [Second Test]

### <Example 11>

Based on the results of the above investigation, calcium carbonate was produced using a sealable production device as shown in Fig. 2. Thus, 1.5 L of 0.1 mol/L calcium hydroxide (Ca(OH)₂) slurry was prepared. In addition, a cylindrical reaction tank (inner diameter 13.3 cm, height 25 cm, internal capacity 3.4 L) was used, and the fine bubble generator used was the same as in Examples 1, 2, and 5 (average pore diameter 1.3 µm). The fine bubble generator was placed in the cylindrical reaction tank, and calcium hydroxide slurry was introduced. While stirring the calcium hydroxide slurry with a stirrer (stirring blade ϕ9 cm, stirring speed 0.8 m/s), 100% carbon dioxide gas was supplied from the carbon dioxide supply section, and fine bubbles including carbon dioxide were generated from the fine bubble generator. At this time, carbon dioxide was supplied for 15 min at a flow rate of 1500 ml/min per 1 mol of calcium hydroxide (supply time A). Even after the supply of carbon dioxide was stopped, the carbon dioxide and calcium hydroxide were reacted while being stirred with the stirrer, and the time required for the pH to stabilize at about 6.5 to 6.8 (time B until the reaction stops) was measured. In addition, the maximum pressure inside the container from the start of carbon dioxide supply to the stop of supply was measured using a pressure gauge. The results are shown in Table 2. The temperature at the start of the reaction was 20°C, and the pH before the start of the reaction was about 12.5. In addition, the supply pressure of carbon dioxide to the fine bubble generator was controlled between 0.155 and 0.25 MPa, and the difference between the supply pressure and the pressure inside the container at which ultrafine bubbles were likely to be generated was maintained.

### <Examples 12 to 14>

The calcium hydroxide concentration of the calcium hydroxide slurry was changed as shown in Table 2, and carbon dioxide was supplied under the conditions shown in Table 2. Other than this, calcium carbonate was produced in the same manner as in Example 11. In addition, the supply pressure of carbon dioxide to the fine bubble generator was controlled between 0.155 and 0.25 MPa, and the difference between the supply pressure and the pressure inside the container at which ultrafine bubbles were likely to be generated was maintained. Table 2 shows the measurement results of reaction time and maximum pressure inside the container.

### <Example 15>

The stirring speed was changed as shown in Table 2, and carbon dioxide was supplied under the conditions shown in Table 2. Other than this, calcium carbonate was produced in the same manner as in Example 14. In addition, the supply pressure of carbon dioxide to the fine bubble generator was controlled between 0.155 and 0.25 MPa, and the difference between the supply pressure and the pressure inside the container at which ultrafine bubbles were likely to be generated was maintained. Table 2 shows the measurement results of reaction time and maximum pressure inside the container.

### <Example 16>

The concentration of the slurry was changed to 2 mol/L, and carbon dioxide was supplied under the conditions shown in Table 2. Other than this, calcium carbonate was produced in the same manner as in Example 15. In addition, the supply pressure of carbon dioxide to the fine bubble generator was controlled between 0.155 and 0.25 MPa, and the difference between the supply pressure and the pressure inside the container at which ultrafine bubbles were likely to be generated was maintained. Table 2 shows the measurement results of reaction time and maximum pressure inside the container.

### <Example 17>

Carbon dioxide was supplied under the conditions shown in Table 2 using a stainless steel tube with an outer diameter of 6.35 mm and an inner diameter of 4.93 mm instead of the fine bubble generator. Other than this, calcium carbonate was produced in the same manner as in Example 12. In Example 17, the pH stopped decreasing at 6.85 and the pressure rose rapidly, so the reaction was stopped after 60 min. Further, the supply pressure of carbon dioxide in Example 17 was controlled from 0.001 to 0.3 MPa. Table 2 shows the measurement results of reaction time and maximum pressure inside the container.

### <Example 18>

Carbon dioxide was supplied under the conditions shown in Table 2 using the same stainless steel tube as in Example 17 instead of the fine bubble generator. Other than this, calcium carbonate was produced in the same manner as in Example 15. Further, the supply pressure of carbon dioxide in Example 18 was controlled between 0.001 and 0.3 MPa. Table 2 shows the measurement results of reaction time and maximum pressure inside the container.

### [Table 2]

**Table 2**

| | Slurry concentra tion (mol/L) | Stirring speed (m/s) | Supply conditions of carbon dioxide | | | Time B until the reaction stops (min) | Reaction time (A+B) (min) | Maximum pressure inside container (MPa) |
|---|---|---|---|---|---|---|---|---|
| | | | Supply method | Average carbon dioxide gas flow rate (ml/min) | Supply time A (min) | | | |
| Example 11 | 0.1 | 0.8 | 1.3 µm fine bubble generator | 225 (1500 ml/min per 1 mol of Ca(OH)₂) | 15 | 5 | 20 | 0.015 |
| Example 12 | 0.25 | 0.8 | 1.3 µm fine bubble generator | 250 (667 ml/min per 1 mol of Ca(OH)₂) | 34 | 5 | 39 | 0.015 |
| Example 13 | 0.5 | 0.8 | 1.3 µm fine bubble generator | 250 (333 ml/min per 1 mol of Ca(OH)₂) | 68 | 5 | 73 | 0.015 |
| Example 14 | 1 | 0.8 | 1.3 µm fine bubble generator | 250 (167 ml/min per 1 mol of Ca(OH)₂) | 134 | 5 | 139 | 0.03 |
| Example 15 | 1 | 1.32 | 1.3 µm fine bubble generator | 725 (483 ml/min per 1 mol of Ca(OH)₂) | 47 | 15 | 62 | 0.08 |
| Example 16 | 2 | 1.32 | 1.3 µm fine bubble generator | 300 (100 ml/min per 1 mol of Ca(OH)₂) | 224 | 15 | 239 | 0.099 |
| Example 17 | 0.25 | 0.8 | Stainless steel tube | 100 (267 ml/min per 1 mol of Ca(OH)₂) | 84 | 20 | 104 | 0.3 |
| Example 18 | 1 | 1.32 | Stainless steel tube | 125 (83 ml/min per 1 mol of Ca(OH)₂) | 269 | 20 | 289 | 0.3 |

In Examples 11 to 16, by using the fine bubble generator with an average pore diameter of 1.3µm and controlling the flow rate of carbon dioxide per 1 mol of calcium hydroxide, the production could be carried out with the maximum pressure inside the container of 0.1 MPa or less from the start of carbon dioxide supply to the stop of supply. In particular, in Example 11 to 13, the production could be carries out at extremely low pressure, with the maximum pressure inside the container being 0.015 MPa or less. Further, when comparing Example 12 and Example 17, which had the same slurry concentration and stirring speed, it is understood that Example 12, which used the fine bubble generator, could shorten the reaction time by about 60 min. Furthermore, when comparing Example 14 and Example 15, which had the same slurry concentration, it is understood that the reaction time can be further shortened by setting a high flow rate of carbon dioxide per 1 mol of calcium hydroxide and increasing the stirring speed.

Meanwhile, in Example 17 in which the fine bubble generator was not used, the pH stopped decreasing at 6.85 and the maximum pressure inside the container became 0.3 MPa, so the blowing of carbon dioxide gas was stopped. Further, in Example 18, the pressure increased significantly, and the maximum pressure inside the container rose to 0.3 MPa while carbon dioxide was being supplied at a very low flow rate. Although the reaction was advanced until the pH reached about 6.8 by intermittently supplying carbon dioxide, the supply of carbon dioxide was then stopped. Where carbon dioxide is supplied using the stainless steel tube instead of the fine bubble generator equipped with a porous section having micropores, the supply pressure from the supply line of the carbon dioxide supply section could become approximately the pressure inside the container, so it was necessary to supply carbon dioxide at a low supply pressure. In particular, in the later stages of the reaction, it could be difficult to supply carbon dioxide unless there is a pressure difference between the internal pressure of the container and the stainless steel tube, and the control was difficult. In addition, since the bubbles including the supplied carbon dioxide were large, the bubbles rose quickly and carbon dioxide gas accumulated in the voids of the container, causing a significant decrease in the contact area between the slurry and the gas. It is presumed that for this reason, the reaction time increased, the carbonation reaction did not proceed sufficiently, and the pH stopped decreasing.

### [Third Test]

Next, the average pore diameter of the micropores of the fine bubble generator provided with the porous section having the micropores was investigated. Specifically, an immersion-type fine bubble generators made of ceramic (manufactured by Noritake Company Limited) with average pore diameters of 0.5 µm, 3.4 µm, and 10 µm were prepared.

### <Examples 21 to 24>

In Examples 21 to 24, carbon dioxide was supplied using fine bubble generators having the average pore diameters shown in Table 3. Further, the stirring speed was changed as shown in Table 3. Other than this, calcium carbonate was produced in the same manner as in Example 14. In addition, the supply pressure of carbon dioxide to the fine bubble generator was controlled between 0.155 and 0.25 MPa, and the difference between the supply pressure and the pressure inside the container at which ultrafine bubbles were likely to be generated was maintained. Table 3 shows the measurement results of reaction time and maximum pressure inside the container. Table 3 also includes Examples 14 and 15 for reference.

### <Example 25>

The concentration of the slurry was changed to 3 mol/L, and carbon dioxide was supplied under the conditions shown in Table 3 by using the fine bubble generator with an average pore diameter of 3.4 µm. Other than this, calcium carbonate was produced in the same manner as in Example 15. In addition, the supply pressure of carbon dioxide to the fine bubble generator was controlled between 0.155 and 0.25 MPa, and the difference between the supply pressure and the pressure inside the container at which ultrafine bubbles were likely to be generated was maintained. Table 3 shows the measurement results of reaction time and maximum pressure inside the container.

**Table 3**

| | Slurry concentra tion (mol/L) | Stirring speed (m/s) | Supply conditions of carbon dioxide | | | Time B until the reaction stops (min) | Reaction time (A+B) (min) | Maximum pressure inside container (MPa) |
|---|---|---|---|---|---|---|---|---|
| | | | Supply method | Average carbon dioxide gas flow rate (ml/min) | Supply time A (min) | | | |
| Example 14 | 1 | 0.8 | 1.3 µm fine bubble generator | 250 (167 ml/min per 1 mol of Ca(OH)₂) | 134 | 5 | 139 | 0.03 |
| Example 15 | 1 | 1.32 | 1.3 µm fine bubble generator | 725 (483 ml/min per 1 mol of Ca(OH)₂) | 47 | 15 | 62 | 0.08 |
| Example 21 | 1 | 1.32 | 0.5 µm fine bubble generator | 150 (100 ml/min per 1 mol of Ca(OH)₂) | 224 | 5 | 229 | 0.03 |
| Example 22 | 1 | 0.8 | 3.4 µm fine bubble generator | 500 (333 ml/min per 1 mol of Ca(OH)₂) | 67 | 15 | 82 | 0.099 |
| Example 23 | 1 | 1.32 | 3.4 µm fine bubble generator | 875 (583 ml/min per 1 mol of Ca(OH)₂) | 39 | 15 | 54 | 0.099 |
| Example 24 | 1 | 1.32 | 10 µm fine bubble generator | 900 (600 ml/min per 1 mol of Ca(OH)₂) | 38 | 15 | 53 | 0.099 |
| Example 25 | 3 | 1.32 | 3.4 µm fine bubble generator | 500 (111 ml/min per 1 mol of Ca(OH)₂) | Supply is stopped after 30 min | - | - | 0.08 |

From the results if Exampkle 21 to 24 , it cand be understood that even if the average pore diameter of the fine bubble generator is changed, the produdction can be carried out with the maximum pressure inside the container of 0.1 MPa or less from the start of carbon dioxide supply to the stop of supply. In addition, by increasing the average pore diameter, it was possible to set a high flow rate of carbon dioxide per 1 mol of calcium hydroxide, which is presumably why the reaction time could be shortened.

Meanwhile, as shown in Example 25, even when using the fine bubble generator with an average pore diameter of 3.4 µm and setting a relatively high flow rate of carbon dioxide per 1 mol of calcium hydroxide, where the slurry concentration was too high, clogging occurred in the porous section of the fine bubble generator, making it impossible to suitably produce calcium carbonate.

Based on the above results, it is understood that a production method of calcium carbonate for safely and easily fixing carbon dioxide as calcium carbonate can be realized by supplying carbon dioxide from a fine bubble generator so that the flow rate of carbon dioxide is 40 to 2500 ml/min per 1 mol of calcium hydroxide in a container configured to prevent carbon dioxide from being released into the atmosphere.

Although specific examples of the present invention have been described above in detail, these are merely illustrative and do not limit the scope of the claims. The technique set forth in the claims is inclusive of various modifications and changes to the specific examples illustrated above.

### Reference Signs List

- 10: Fine bubble generator
- 12: Porous section
- 12A: Outer surface side
- 12B: Inner surface side
- 14A: Support section
- 14B: Support section
- 16: Gas introduction section
- 100: Calcium carbonate production device
- 110: Slurry supply section
- 112: Tank
- 114: Line
- 116: Valve
- 120: Carbon dioxide supply section
- 121: Storage section
- 122: Pressure adjustment valve
- 123: Flow rate adjustment valve
- 124: Flowmeter
- 125: Line
- 126: Valve
- 130: Reaction section
- 131: Reaction tank
- 132: Stirrer
- 133: Line
- 134: Valve

## Claims

1. A production method of calcium carbonate for fixing carbon dioxide as calcium carbonate, the production method comprising:
a step of preparing a slurry including calcium hydroxide; and
a step of precipitating the calcium carbonate by generating fine bubbles including carbon dioxide from a fine bubble generator that is provided with a porous section having micropores and supplying the carbon dioxide into the slurry including calcium hydroxide in a container configured to prevent carbon dioxide from being released into the atmosphere, wherein
the fine bubble generator supplies carbon dioxide so that a flow rate of the carbon dioxide is 40 to 2500 ml/min per 1 mol of the calcium hydroxide.

2. The production method of calcium carbonate according to claim 1, wherein a concentration of the calcium hydroxide in the slurry including the calcium hydroxide is 0.1 mol/L or more and 2 mol/L or less.

3. The production method of calcium carbonate according to claim 1 or 2, wherein the micropores in the fine bubble generator have an average pore diameter of 0.5 µm or more and 10 µm or less.

4. The production method of calcium carbonate according to any one of claims 1 to 3, wherein the precipitation step is performed, with the container being sealed to prevent the carbon dioxide from being released into the atmosphere.

5. The production method of calcium carbonate according to claim 4, wherein the precipitation step is performed carried out while a pressure inside the sealed container is maintained at less than 0.2 MPa.

6. The production method of calcium carbonate according to any one of claims 1 to 5, wherein
the average diameter of the fine bubbles generated in the precipitation step is 100 µm or less, and
the fine bubbles are include at least ultrafine bubbles having a diameter of less than 1 µm.

7. A calcium carbonate production device for fixing carbon dioxide as calcium carbonate, the calcium carbonate production device comprising:
a container configured to prevent carbon dioxide from being released into the atmosphere;
a slurry supply section that supplies a slurry including calcium hydroxide into the container, and
a carbon dioxide supply section that supplies carbon dioxide into the slurry including the calcium hydroxide that has been supplied into the container,
wherein the carbon dioxide supply section supplies fine bubbles including the carbon dioxide from a fine bubble generator that is provided with a porous section having micropores so that a flow rate of the carbon dioxide is 40 to 2500 ml/min per 1 mol of the calcium hydroxide.

8. The calcium carbonate production device according to claim 7, wherein the container has a sealed configuration such that the carbon dioxide is prevented from being released into the atmosphere.

9. The calcium carbonate production device according to claim 7 or 8, wherein the fine bubbles provided by the fine bubble generator have an average diameter of 100 µm or less and include at least ultrafine bubbles having a diameter of less than 1 µm.
